# EUROPEAN PATENT APPLICATION

(11) **EP 4 166 608 A1**
(43) Date of publication of application: **19.04.2023**
(21) Application number: 21425048.2
(22) Date of filing: 12.10.2021
(51) Int. Cl.: C08L 17/00, C08K 5/09, C08L 21/00

(54) **RUBBER COMPOSITION WITH LOW ODOR EMISSIONS AND PROCESS FOR ITS PRODUCTION**

(71) Applicant: A.G.R. S.r.l., 10121 Torino (IT)
(72) Inventor: Scola, Davide, I-10121 TORINO (IT)
(74) Representative: Garavelli, Paolo

(57) **Abstract**

A rubber composition with low odor emissions is disclosed comprising at least one vulcanized rubber having a granulometry varying from micronized to powder to granule to chip, the composition comprising at least an amount of one or more organic derivatives of zinc or one or more organic derivatives of magnesium. A process for the production of this composition is also described.

## Description

The present invention refers to a rubber composition with low odor emissions, and to a process for its production.

In general, the present invention relates to the sector of the recycling of articles or consumer products.

In particular, the present invention relates to the recovery of polymeric waste materials by chemically breaking the molecular chains of polymers or breaking cross-links, for example de-vulcanization by treatment with organic material, substantially reducing odoriferous emissions.

The state of the art is represented by patent US7045555B2 concerning a composition of regenerated resin comprising a material pulverized from an article molded in an aromatic polycarbonate resin, excellent both in the ability to maintain physical properties for a long period of time, and in mechanical resistance. Preferred specific examples of the composition include: triphenyl phosphate tris (dimethylphenyl) phosphate, tris (diethylphenyl) phosphate, tris (di-isopropylphenyl) phosphate, tris (di-n-Butylphenyl) phosphate, tris (2,4-di-tert -butylphenyl) phosphate and tris (2,6-di-tert-Butylphenyl) phosphate. The above phosphate compounds can be used alone or in combination. To produce the regenerated resin composition, various antioxidants can be incorporated as a virgin material. Examples of antioxidants include: vitamin E, n-octadecyl-β-(4'-hydroxy-3',5'-di-tert-Butylphenyl) propionate. The antioxidant content per 100% by weight of the regenerated resin composition is preferably from 0.0001 to 0.5% by weight, more preferably from 0.001 to 0.3% by weight.

A problem concerning a production cycle of regenerated rubber by extrusion is represented by the generation of odors during cooling and storage in the warehouse.

In fact, during the production cycle of the regenerated rubber by extrusion, sulfured volatile organic substances are emitted, due to the presence of sulfur used for vulcanization. The molecular bonds of the rubber regenerated by extrusion allow to release the sulfur and transform it into highly reactive hydrogen sulfide. Despite the rigorously controlled temperature during regeneration, aromatic hydrocarbons are released which, although in actually very small amounts (of the order of a few parts per million), tend to bind with hydrogen sulfide, generating highly odorous organic thio-derivatives, with an acrid odor, which is very annoying.

Therefore, object of the present invention is solving the aforementioned prior art problems by providing a rubber composition with low odoriferous emissions which allows to considerably reduce the formation of organic sulfur substances, in particular of thio-derivatives generated with the cooling carried out immediately after the extrusion, at controlled temperature and pressure, during the regeneration cycle.

A further object is providing a rubber composition with low odoriferous emissions which allows an increase in the lifetime of rubber products obtained by rubber extrusion.

The aforementioned and other objects and advantages of the invention, as will emerge from the following description, are achieved with a rubber composition with low odor emissions and a process for its production, as described in the respective independent claims. Preferred embodiments and non-trivial variants of the present invention are the subject of the dependent claims.

It is understood that all attached claims form an integral part of the present description.

It will be immediately obvious that numerous variations and modifications (for example relating to shape, dimensions, arrangements and parts with equivalent functionality) can be made to what is described without departing from the scope of the invention as appears from the attached claims.

The present invention therefore relates to a rubber composition with low odoriferous emissions comprising at least one vulcanized rubber having a granulometry varying from micronized, i.e. <0.4 mm, to powder, i.e. <0.8 mm, to granule, i.e. from 0.8 mm to 10 mm, to wood chips, i.e.> 10 mm.

Advantageously, this low odor-emitting rubber composition further comprises an amount of one or more organic derivatives of zinc or one or more organic derivatives of magnesium; this amount by weight being comprised between 0.1% and 25% by weight on the total composition of the rubber.

In particular, such organic zinc derivatives can comprise zinc ricinoleate.

Alternatively or in addition, such organic zinc derivatives may comprise zinc stearate.

The magnesium derivatives produce the same antioxidant effect, with the elimination of volatile thiols derived from the mechanical heat treatment of de-vulcanization.

The organic derivatives of zinc and magnesium can be used in combination, or independently, with variable percentages.

Obviously, it is possible to obtain a rubber composition with low odor emissions according to the present invention comprising a combination of zinc ricinoleate and zinc stearate and organic magnesium derivatives.

According to a preferred embodiment, the low odor emissions rubber composition according to the present invention comprises a mixture of tris (2,4-diter-butylphenyl) phosphite in an amount by weight comprised between 1% and 20%, preferably equal to 10 %, and of octodecyl 3- (3,5-di-tert-butyl-4-hydroxyphenyl) propionate in an amount by weight comprised between 1% and 20%, preferably equal to 10%.

The rubber composition with low odoriferous emissions according to the present invention allows achieving the intended objects.

The introduction of zinc ricinoleate or zinc stearate, preferably up to 0.5% by weight, allows significantly reducing the formation of thio-derivatives generated with the cooling carried out immediately after the extrusion at controlled temperature and pressure.

The introduction of organic zinc derivatives in the production cycle of regenerated rubber by extrusion allows a significant reduction of organic sulfur substances, in particular thio-derivatives, because hydrogen sulfide is blocked by zinc derivatives. In fact, the value found after the insertion of the aforementioned organic derivatives during regeneration allows reducing the concentration of sulfur substances. In particular, this reduction stands at a value of a <0.001 mg/Nm³, according to the measurements carried out in a special storage area of the pallets of regenerated freshly extruded and left to cool.

In the production cycle of regenerated rubber from ELTs ("End of Life Tires") and EPDM ("Ethylene-Propylene Diene Monomer"), an extremely short life time of the extruded product was found.

Among the antioxidants suitable for the production of regenerated rubber, two highly reactive products have been identified, which have the peculiarity of exchanging electrons with the sulfur present in the extruded PFU and EPDM, in order to be able to crosslink to avoid the entry of oxygen present in air:
- tris (2,4-diter-butylphenyl) phosphite;
- octodecyl 3- (3,5-di-tert-butyl-4-hydroxyphenyl) propionate.

A rubber mixture from ELT or EPDM in microgranules is processed in a single screw by rigorously controlling the mixing temperatures to avoid superficial carbonization and degradation of the antioxidants present in the compound.

The decomposition temperature is put under strict control by programming a PLC controller of the extruder used. The aforementioned temperature is that measured by the TGA diagram.

Through a test performed with a mixture of:
- 10% tris (2,4-diter-butylphenyl) phosphite;
- 10% octodecyl 3- (3,5-di-tert-butyl-4-hydroxyphenyl) propionate;
it was possible to find an excellent mechanical and chemical response of vulcanized rubber from shredded ELT to particles of size <0.1 mm, with a high fluidity due to the lack of oxidative phenomena. These oxidative phenomena cause immediate aging and a considerable hardening of the compound. The samples produced with single screw have an acrid and intense odor, characteristic of the compounds used for the production of tires. The single screw used is of the laboratory type, with a maximum capacity of 30 kg/h. The extruded specimens have the following dimensions: width about 70 mm, thickness about 20 mm and continuous length until the end of the granulated sample to be extruded. The samples produced are subjected to the following chemical-physical analyses:
Mooney viscosity ISO 280-1 2009 ML1 + 4 at 100 °C;
Shore A hardness ISO 7619-2011.

The sample used as a comparison is an extruded sample without additives and subjected to chemical-physical analysis analyzed immediately and after three and twelve months of storage at room temperature.

The de-vulcanization process takes place with a thermal-mechanical process through single-screw or twin-screw extruders, whether they are counter-rotating or co-rotating with thermal induction through resistances at controlled and independent temperatures.

The storage and conservation of rubber products take place in a special closed room at a controlled temperature, equipped with forced air circulation.

The recycling plant (not shown) is connected to a washing tower, whose function consists in sieving the air through the action of NaClO (sodium hypochlorite) and NaOH (caustic soda): with this system, the further volatile thiols remaining in the rubber, and an antioxidant effect is produced with consequent stabilization of the rubber cross-linking and strengthening the anti-odorant action.

The residence time in the storage and stabilization room ranges from 10 days to 60 days depending on the rubber composition.

The process described above can be used in combination (chemical substance + storage and stabilization room) or with independent steps from each other.

According to a preferred variant, this process is not limited only to de-vulcanized rubbers deriving from EPDM or PFU, but is applied to all compositions of de-vulcanized rubbers, such as NBR, HNBR, SBR, BR, silicone rubbers, FKM, NR and the like, be they derived from scraps or virgins.

Some preferred forms of implementation of the invention have been described, but of course they are susceptible to further modifications and variations within the same inventive idea. In particular, numerous variants and modifications, functionally equivalent to the preceding ones, which fall within the scope of the invention as highlighted in the attached claims, will be immediately apparent to those skilled in the art.

## Claims

1. Rubber composition with low odor emissions comprising at least one vulcanized rubber having a granulometry varying from micronized, i.e. <0.4 mm, to powder, i.e. <0.8 mm, to granule, i.e. from 0.8 mm to 10 mm, to wood chips, i.e.> 10 mm, the composition comprising an amount of one or more organic derivatives of zinc or one or more organic derivatives of magnesium.

2. Rubber composition according to the preceding claim, **characterized in that** said amount by weight of one or more said organic derivatives of zinc or organic derivatives of magnesium is comprised between 0.1% and 25% by weight of the composition total rubber.

3. Rubber composition according to any one of the preceding claims, **characterized in that** said organic zinc derivatives comprise zinc ricinoleate.

4. Rubber composition according to any one of the preceding claims, **characterized in that** said organic zinc derivatives comprise zinc stearate.

5. Rubber composition according to any one of the preceding claims, **characterized in that** it comprises a mixture of tris (2,4-diter-butylphenyl) phosphite in an amount by weight of between 1% and 20%, preferably equal to 10%, and of octodecyl 3- (3,5-di-tert-butyl-4-hydroxyphenyl) propionate in an amount by weight ranging from 1% to 20%, preferably equal to 10%.

6. De-vulcanization process to obtain a rubber composition according to any one of the preceding claims, said process taking place with a thermal-mechanical process through single-screw or twin-screw extruders, said extruders being counter-rotating or co-rotating with thermal induction through resistances at controlled temperatures and independent.

7. Process according to claim 6, also comprising the steps of storage and conservation of the rubber products that take place in a closed room at a controlled temperature, equipped with forced air circulation.

8. Process according to claim 6 or 7, further comprising a recycling plant connected to a washing tower, whose function consists in sieving the air through the action of sodium hypochlorite, NaClO, and caustic soda, NaOH, eliminating the further volatile thiols remaining in the rubber, and producing an antioxidant effect with consequent stabilization of the rubber cross-linking and strengthening the anti-odorant action.

9. Process according to any one of claims 6 to 8, in which the residence time in the storage and stabilization room ranges from 10 days to 60 days depending on the rubber composition.

10. Process according to any one of claims 6 to 9, usable both for de-vulcanized rubbers deriving from EPDM or PFU, and for all de-vulcanized rubbers, such as NBR, HNBR, SBR, BR, silicone rubbers, FKM, NR and similar, be they derived from scraps or virgins.
